# EUROPEAN PATENT SPECIFICATION

(11) **EP 0 942 030 B1**
(45) Date of publication and mention of the grant of the patent: **28.12.2005**
(21) Application number: 98942699.4
(22) Date of filing: 18.09.1998
(51) Int. Cl.: C08J 5/04, C08K 7/02, C08L 23/10, C08L 23/12

(54) **COMPOSITE MATERIAL CHARGED/REINFORCED WITH AGRO-VEGETABLE FIBRES**
MIT AGRO-PFLANZENFASERN VERSTÄRKTER VERBUNDWERKSTOFF
MATERIAU COMPOSE CHARGE/RENFORCE AVEC DES FIBRES AGRO-VEGETALES

(30) Priority: 19.09.1997 ES 9701965
(43) Date of publication of application: 15.09.1999
(73) Proprietor: GRUPO ANTOLIN-INGENIERIA, S.A., 09080 Burgos (ES)
(72) Inventor: REY DE LAS PENAS, Fernando, E-09001 Burgos (ES); SOTO LOSADA, Pablo, E-09006 Burgos (ES); GONZALEZ GAL, Yolanda, E-47009 Valladolid (ES); MERINO SENOVILLA, Juan Carlos, E-47003 Valladolid (ES)
(74) Representative: Esteban Perez-Serrano, Maria Isabel
(86) International application number: PCT/ES1998/000258
(87) International publication number: WO 1999/015579

(56) References cited:
- EP-A- 0 320 042
- GB-A- 2 090 849
- US-A- 5 340 642

## Description

This invention relates to a composite material, based on a thermoplastic reinforced/loaded with agro-vegetable fibres, for the interior trim of vehicles.

In the automobile industry there is an ever growing tendency to use plastic materials, and in particular the use of the so-called thermoplastics stands out, to manufacture internal components, because they can be totally recycled and also their versatility and ease of processing. Within this increasing trend to use thermoplastic materials, the rapid growth of those based on polypropylene stands out, due to its rigidity and thermal stabili ty and its possibility of being adapted to specific requirements according to the final application.

In order to improve certain characteristics of thermoplastic materials for use in this type of applications, manufacturers resort to additives with loads or reinforcing materials.

The automobile internal trimming industry already habitually uses composite material with a thermoplastic matrix and a load of wood sawdust, obtained in the form of an extruded laminated plate, and later transformed by preheating in am infrared oven and cold shaping, in order to obtain parts such as door panels, trays or seat backrests.

This material has mechanical conditions that can be improved by replacing the usual load with a load in the form of fibres, which, because of their structure, contribute a function of reinforcement, giving rise to an improvement in the characteristics needed for the correct functioning of the final part during its working life.

In the same way, there are parts in the automobile market manufactured in injected thermoplastic, in which, either to make them cheaper by reducing the percentage of plastic material or to modify their properties due to a synergy effect, variable percentages of load/reinforcement are added to them.

As opposed to these traditional techniques, the ob jective of the invention is to provide a composite material reinforced/loaded with plantation-grown and specially cultivated agro-vegetable fibres.

Another object of the invention is a composite material, which, because of the structure itself of its fibres, contributes an improvement of its mechanical properties, modulus of elasticity and specific strength.

Another object of the invention is a composite material that stands out due to its accessibility and environmental respect, as well as for its socio-economic characteristics, given that it enables the recovery of alternative markets for agro-vegetable fibres that are currently in decline due to the introduction of synthetic fibres.

In order to achieve these objectives, the composite material of the invention uses a matrix or thermoplastic material which is loaded/reinforced with agro-vegetable fibres, such as sisal, jute, hemp, cambric grass, flax, cotton, Java cotton, coconut or kenaf fibres, with these fibres being presented in different lengths and variable percentages depending on the process that is used in order to obtain the item and according to the final application.

The use of a reinforcement in the form of fibres, and more specifically plantation-grown and specially cultivated fibres, noticeably improves the mechanical properties of the material. These fibres have mechanical properties, modulus of elasticity and specific strength that are comparable to those of the technical fibres widely used in engineering applications, such as, for instance, glass fibre.

The fibres in question that act as load and/or reinforcement can belong to only one of the types of fibres described previously or consist of a combination of any of them, by mixing one or more types of agro-vegetable fibres.

In the same way, the fibres incorporated as load and/or reinforcement, either singly or mixed in groups of these, can be incorporated together with material obtained from recycling the composite itself in the cases.

The fibre incorporated can be submitted to any kind of treatment prior to its use, which might consist of physical and/or chemical treatment aimed at improving the compatibility and fastening (binding) between fibre and matrix or at favouring the manageability of the fibre and its dispersion (spreading) inside the thermoplastic chosen as the matrix.

As regards the matrix used for the composite material, it will be, as already mentioned, thermoplastic material based on polypropylene, chosen from among the different grades that exist, which can even be mixed with other types of polymers, obviously with the incorporation of all kinds of additives that should be necessary, such as stabilisers, antioxidants, colourings, fire-resisting agents, lubricants, etc.

The composite material of the invention can be obtained by means of extrusion and later calendering (hot-pressing), including the material that constitutes the matrix and the fibres, without there being any kind of union between them, with which the extruded product will have the form of a sheet or laminated plate.

The agro-vegetable fibres with which the extruder is fed will have a length with a value of between 0.5 and 12 millimetres, and can be added in a percentage of between 30% and 70% in weight.

In the same way, the material, once it has been extruded, can be laminated by adding a coating of another textile or non-textile material to one or both sides of the composite sheet.

The composite material can also be obtained by extrusion in a flat header extrusion press fed with thermo plastic material, followed by a laminating process in which the agro-vegetable fibres are added, with the in corporation of these fibres being either in the form of a mat or veil (fleece/voile) to one or both sides of the plate formed mainly by thermoplastic material, so that a sandwich structure is provided to the plate obtained.

The product obtained by extrusion and laminated can be transformed in order to achieve a part with the final shape desired from the said plate, by means of preheating and later moulding in a cold mould and either with or without the application of air at high pressure during this moulding process.

The composite material can be produced by means of a pelletizing process (using pellets) with the suitable methods and machinery of this type, so that this material is presented in pellet form.

In this pelletizing process, the materials that form the matrix and the agro-vegetable fibres, with which the machine is fed, are incorporated without any type of union existing between them.

The composite obtained by pelletizing is capable of being transformed in order to achieve a part with the final shape desired, starting from the pellet, all done by means of the traditional processes of injection at high or low pressure, according to the cases.

If required, textiles and non-textiles can be placed in the mould, depending on the coating desired on the final part.

In the same way, the pellet can be transformed by means of an intermediate process of extrusion and calandering, that gives it the shape of the laminate transformable by moulding, as described previously, but in which the extrusion press is fed with the pellet for the composite.

## Claims

1. Composite material, which comprises a matrix of thermoplastic material loaded and/or reinforced with a load that comprises several agro-vegetable fibres, which is **characterised in that** the process used to obtain it can be carried out by means of an operation in a flat header extrusion press, followed by a process of laminating in calendering line that gives the extruded product the shape of a plate or lamina.

2. Composite material, in accordance with claim 1, **characterised in that** in order to obtain the composite by extrusion and later calendering, the extrusion press is fed with the material that constitutes the matrix and by the agro-vegetable fibres that constitute the load and/or reinforcement, without there being any kind of union between them.

3. Composite material, in accordance with claims 1 and 2, **characterised in that** the agro-vegetable fibres with which the extrusion press is fed have a length with a value of between 0.5 and 12 millimetres and can be added in a percentage of between 30% and 70% in weight.

4. Composite material, in accordance with claims 1, 2 and 3, **characterised in that** after being extruded, it can be laminated by adding a coating of another textile or non-textile material to one or both sides of the plate of composite.

5. Composite material, in accordance with claims 1 to 4, **characterised in that** the composite product obtained by extrusion and laminated can be transformed, in order to achieve a part with the desired final shape, starting from the plate, by means of preheating and later moulding in a cold mould, and either with or without the application of air at high pressure during this moulding process.

6. Composite material, in accordance with claims 1 to 5, **characterised in that** on forming the sheet of composite into a final shape, it can be coated with other materials at the time of carrying out this transformation.

7. Composite material, which comprises a matrix of thermoplastic material loaded and/or reinforced with a load that comprises several agro-vegetable fibres, which is **characterised in that** the process in order to obtain the composite can be by means of an extrusion operation in a flat header extrusion press fed with the thermoplastic material, followed by a laminating process in which the agro-vegetable fibres are added in the form of a mat or veil (fleece/voile) to one or both sides of the plate formed mainly by thermoplastic material, so that a sandwich structure is provided to the plate obtained.

8. Composite material, which comprises a matrix of thermoplastic material loaded and/or reinforced with a load that comprises several agro-vegetable fibres, which is **characterised in that** the process in order to obtain the composite can be by means of a pelletizing process, using the traditional pelletizing methods and machinery, in order to obtain a composite material of thermoplastic and agro-vegetable fibres in pellet form.

9. Composite material, in accordance with claim 8, **characterised in that** in order to obtain the composite by the pelletizing process, the pelletizer is fed with the material that constitute the matrix and by the agro-vegetable fibres that constitute the load and/or reinforcement, without there being any kind of union between them.

10. Composite material, in accordance with claims 8 and 9, **characterised in that** the composite product obtained by the pelletization can be transformed, in order to obtain a part with the desired final shape, starting from the pellet, by means of the traditional processes of injection at high or low pressure, according to the cases.

11. Composite material, in accordance with claims 8 to 10, **characterised in that** on transforming the pellet by the low pressure injection method, textiles or non-textiles can be placed in the mould with the purpose of coating the final part.

12. Composite material, in accordance with claims 8 and 9, **characterised in that** the pellet can be transformed by means of an intermediate process of extrusion and calendering (which gives it the shape of a laminate transformable by moulding) a process already described in claim 6, but in which the extrusion press is fed with the pellet for the composite.

## Patentansprüche

1. Verbundmaterial, das über eine Grundmasse aus thermoplastischem Material verfügt, das beaufschlagt ist und/oder mit einer Beaufschlagung aus mehreren agropflanzlichen Fasern verstärkt ist, **dadurch gekennzeichnet, dass** das Verfahren, um dieses zu erhalten, durch einen Arbeitsvorgang in einer Flachkopfextrusionspresse, gefolgt von einem Laminierungsverfahren in einer Kalandriervorrichtung, die dem extruierten Produkt die Form eines Tellers oder einer Scheibe gibt.

2. Verbundmaterial gemäss Anpruch 1, **dadurch gekennzeichnet, dass** zum Erhalt des Verbundmaterials durch Extruieren und späterem Kalandrieren die Extrusionspresse mit dem Material der Grundmasse beschickt wird und durch die agropflanzlichen Fasern, die die Beaufschlagung und/oder Verstärkung bilden, ohne dass zwischen ihnen eine Verbindung besteht.

3. Verbundmaterial gemäss Anpruch 1 und 2, **dadurch gekennzeichnet, dass** die agropflanzlichen Fasern, mit denen die Extrusionspresse beschickt wird, eine Länge mit einem Wert zwischen 0,5 und 12 Millimetern haben und zu einem Prozentsatz zwischen 30% und 70% des Gewichts hinzugefügt werden.

4. Verbundmaterial gemäss Anpruch 1, 2 und 3, **dadurch gekennzeichnet, dass** es nach dem Extruieren durch Zufügen einer Schicht eines anderen textilen oder nicht-textilen Material auf eine oder beide Seiten des Verbundmaterialtellers laminiert werden kann.

5. Verbundmaterial gemäss den Ansprüchen 1 bis 4, **dadurch gekennzeichnet, dass** das Verbundmaterial, das durch Extruieren erhalten wird und laminiert wird, verändert werden kann, um ein Teil mit der gewünschten letztlichen Form zu erhalten ausgehend von dem Teller, indem es vorerhitzt wird und später in einer kalten Form geformt wird und mit oder ohne Anwendung von Hochdruckluft während dieses Formverfahrens.

6. Verbundmaterial gemäss den Ansprüchen 1 bis 5, **dadurch gekennzeichnet, dass** während des Formens des Verbundblattes zu der letztlichen Form, dieses gleichzeitig während diese Veränderung durchgeführt wird, mit anderen Materialien beschichtet werden kann.

7. Verbundmaterial, das über eine Grundmasse aus thermoplastischem Material verfügt, das beaufschlagt ist und/oder mit einer Beaufschlagung aus mehreren agropflanzlichen Fasern verstärkt ist, **dadurch gekennzeichnet, dass** das Verfahren, um dieses Verbundmaterial zu erhalten, aus Extruieren in einer Flachkopfextrusionspresse bestehen kann, die mit dem thermoplastischen Material beschickt wird, gefolgt von einem Laminierungsverfahren, in dem dem agropflanzlichen Fasern in Form eines Vlies oder Schleiers (Flausch/Voile) auf eine oder beide Seiten des Tellers hinzugefügt werden, der hauptsächlich aus thermoplastischem Material besteht, so dass dem erhaltenen Teller eine Sandwichstruktur gegeben wird.

8. Verbundmaterial, das über eine Grundmasse aus thermoplastischem Material verfügt, das beaufschlagt ist und/oder mit einer Beaufschlagung aus mehreren agropflanzlichen Fasern verstärkt ist, **dadurch gekennzeichnet, dass** das Verfahren, um dieses Verbundmaterial zu erhalten, aus einem Pelletisierungsverfahren bestehen kann, bei dem herkömmliche Pelletisierungsmethoden und -maschinen verwendet werden, um ein Verbundmaterial aus thermoplastischen und agropflanzlichen Fasern in Pelletform zu erhalten.

9. Verbundmaterial gemäss Anspruch 8, **dadurch gekennzeichnet, dass** zum Erhalt des Verbundmaterials durch das Pelletisierungsverfahren, der mit dem Material beschickt wird, das die Grundmasse ausmacht und durch die agropflanzlichen Fasern, die die Beaufschlagung und/oder Verstärkung bilden, ohne dass zwischen ihnen eine Verbindung besteht.

10. Verbundmaterial gemäss Anspruch 8 und 9, **dadurch gekennzeichnet, dass** das Verbundprodukt, das durch Pelletisierung erhalten wird, umgeformt werden kann, um ein Teil mit der gewünschten Endform zu erhalten, ausgehend von dem Pellet durch herkömmliche Einspritzverfahren bei hohem oder niedrigem Druck je nach Fall.

11. Verbundmaterial gemäss den Ansprüchen 8 bis 10, **dadurch gekennzeichnet, dass** während der Umformung des Pellets durch die Niedrigdruckmethode textile oder nicht-textile Materialien in die Form gegeben werden können, um das Endteil zu beschichten.

12. Verbundmaterial gemäss Anspruch 8 und 9, **dadurch gekennzeichnet, dass** der Pellet durch ein Zwischenverfahren des Extruierens und Kalandrierens (wodurch es die Form einer umformbaren Platte durch Formen erhält) umgeformt werden kann, ein Verfahren, das schon im Anspruch 6 beschrieben wurde, aber bei dem die Extrusionspresse mit den Pellets für das Verbundmaterial beschickt wird.

## Revendications

1. Matière composite, comprenant une matrice de matière thermoplastique chargée et/ou renforcée avec une charge qui comprend plusieurs fibres agro-végétales, qui est **caractérisée en ce que** son procédé d'obtention peut être mis en oeuvre au moyen d'une opération dans une presse d'extrusion à tête plate, suivi d'un procédé de laminage dans une ligne de calandrage qui foumit au produit extrudé la forme dune plaque ou d'une lame.

2. Matière composite, selon la revendication 1, **caractérisée en ce que** pour obtenir le composite par extrusion et ensuite par calandrage, la presse d'extrusion est alimentée par la matière constituant la matrice et par les fibres agro-végétales qui constituent la charge et/ou le renfort, sans y avoir aucun type d'union entre elles.

3. Matière composite, selon les revendications 1 et 2, **caractérisée en ce que** les fibres agro-végétales avec lesquelles est alimentée la presse d'extrusion ont une longueur ayant une valeur entre 0,5 et 12 millimètres et elle peut être ajoutée dans un pourcentage entre 30% et 70% en poids.

4. Matière composite, selon les revendications 1, 2 et 3, **caractérisée en ce qu'**après avoir été extrudée, elle peut être laminée en ajoutant un revêtement d'une autre matière textile ou non-textile sur l'un ou les deux côtés de la plaque de composite.

5. Matière composite, selon les revendications 1 à 4, **caractérisée en ce que** le produit composite obtenu par extrusion et laminage peut être transformé, afin de mettre en oeuvre une pièce ayant la forme finale souhaitée, en partant de la plaque, au moyen de pré-réchauffement et ensuite moulage dans un moule froid, cela avec ou sans l'application d'air à haute pression pendant le procédé de moulage.

6. Matière composite, selon les revendications 1 à 5, **caractérisée en ce que** lors de la conformation de la forme finale de la feuille de composite, elle peut être revêtue par d'autres matières au moment de la mise en oeuvre de cette transformation.

7. Matière composite, comprenant une matrice de matière thermoplastique chargée et/ou renforcée avec une charge qui comprend plusieurs fibres agro-végétales, qui est **caractérisée en ce que** le procédé d'obtention du composite peut être mis en oeuvre au moyen d'une opération d'extrusion dans une presse d'extrusion à tête plate avec la matière thermoplastique, suivi d'un procédé de laminage dans lequel les fibres agro-végétales sont ajoutées sous forme d'une natte ou voile (laine/gaze) à l'un ou les deux côtés de la plaque principalement formée en matière thermoplastique, de manière à foumir une structure sandwich à la plaque obtenue.

8. Matière composite, comprenant une matrice de matière thermoplastique chargée et/ou renforcée avec une charge qui comprend plusieurs fibres agro-végétales; qui est **caractérisée en ce que** le procédé d'obtention du composite peut être mis en oeuvre au moyen d'un procédé de granulation en utilisant les méthodes et la machinerie traditionnelles de granulation, afin d'obtenir une matière composite de matière thermoplastique et de fibres agro-végétales sous forme de pellet.

9. Matière composite, selon la revendication 8, **caractérisée en ce que** pour obtenir le composite par le procédé de granulation, le granulateur est alimenté avec la matière qui constitue la matrice et par les fibres agro-végétales qui constituent la charge et/ ou le renfort, en n'ayant aucun type d'union entre elles.

10. Matière composite, selon les revendications 8 et 9, **caractérisée en ce que** le produit composite obtenu par la granulation peut être transformé, afin d'obtenir une pièce ayant la forme finale souhaitée, en partant du pellet, au moyen de procédés traditionnels d'injection à haute ou basse pression, selon les cas.

11. Matière composite, selon les revendications 8 à 10, **caractérisé en ce que** lors de la transformation du pellet par la méthode d'injection à basse pression, on peut placer des matières textiles ou non-textiles dans le moule afin de revêtir la pièce finale.

12. Matière composite, selon les revendications 8 et 9, **caractérisée en ce que** le pellet peut être transformé au moyen d'un procédé intermédiaire d'extrusion et de calandrage (qui lui fournit la forme d'un produit laminé transformable par moulage), un procédé déjà décrit dans la revendication 6, mais dans lequel la presse d'extrusion est alimentée avec le pellet pour le composite.
